# FASCICULE DE BREVET EUROPEEN

(11) **EP 3 356 650 B1**
(45) Date de publication et mention de la délivrance du brevet: **10.11.2021**
(21) Numéro de dépôt: 16787491.6
(22) Date de dépôt: 27.09.2016
(51) Int. Cl.: F01D 5/28, F04D 29/32

(54) **AUBE COMPRENANT UN BOUCLIER DE BORD D'ATTAQUE ET PROCÉDÉ DE FABRICATION DE L'AUBE**
SCHAUFEL MIT EINEM SHUTZSCHILD AN DER VORDERKANTE UND HERSTELLUNGSVERFAHREN SOLCHER SCHAUFEL
BLADE HAVIND A SHIELD AT THE LEADING EDGE AND PROCESS OF FABRICATING THIS BLADE

(30) Priorité: 28.09.2015 FR 1559132
(43) Date de publication de la demande: 08.08.2018
(73) Titulaire: Safran Aircraft Engines, 75015 Paris (FR)
(72) Inventeur: GIMAT, Matthieu Arnaud, 77550 Moissy-Cramayel Cedex (FR); GUIVARC'H, Jérémy, 77550 Moissy-Cramayel Cedex (FR); NOTARIANNI, Gilles Pierre-Marie, 77550 Moissy-Cramayel Cedex (FR); POUZADOUX, Frédéric Jean-Bernard, 77550 Moissy-Cramayel Cedex (FR); RUF, Thibault, 77550 Moissy-Cramayel Cedex (FR)
(74) Mandataire: Cabinet Beau de Loménie
(86) Numéro de dépôt international: PCT/FR2016/052444
(87) Numéro de publication internationale: WO 2017/055727

(56) Documents cités:
- EP-A2- 2 703 605
- WO-A1-2012/001279
- WO-A1-2015/047756
- DE-A1- 2 644 083
- US-A- 5 392 514
- US-A1- 2010 232 974
- US-B1- 7 841 834

## Description

La présente invention concerne une aube en matériau composite comportant un bouclier de bord d'attaque. De tels boucliers de bord d'attaque sont typiquement destinés à protéger les bords d'attaque d'aubes tournantes ou d'aubes directrices contre les impacts et l'érosion. On entend par « aubes », dans ce contexte, tant les aubes de soufflante que les pales d'hélice aérienne. Afin de limiter leur poids, ces aubes sont typiquement en composite à matrice organique, par exemple en polymère renforcée par des fibres. Bien que ces matériaux présentent des qualités mécaniques généralement très favorables, en particulier par rapport à leur masse, ils présentent une certaine sensibilité aux impacts ponctuels. Des boucliers, typiquement en matériau métallique hautement résistant, comme les alliages de titane, sont donc normalement installés sur les bords d'attaque de telles aubes, afin de les protéger contre ces impacts. Ces impacts peuvent être la conséquence de l'ingestion dans le moteur de gros oiseaux tels que des canards ou de petits oiseaux tels que des moineaux, par exemple. Ces boucliers prennent normalement la forme d'une fine ailette intrados et une fine ailette extrados jointes par une section plus épaisse chevauchant le bord d'attaque, l'ensemble épousant la forme de l'aube sur le bord d'attaque et des sections adjacentes de l'intrados et de l'extrados. Les ailettes intrados et extrados s'étendent sur ces sections de, respectivement, l'intrados et l'extrados de l'aube, et servent principalement à assurer le positionnement et la fixation du bouclier sur le bord d'attaque. WO2015/047756 décrit une aube comportant une électrode sacrificielle. US 2010/232974 A1 montre les caractéristiques technique du préambule de la revendication indépendante 1.

Afin d'améliorer les performances aérodynamiques des aubes, leurs bords d'attaque présentent des formes de plus en plus complexes, ce qui complique la fabrication des boucliers devant épouser ces formes ainsi que la solidarisation du bouclier sur l'aube.

Par ailleurs, lors d'impacts sur une aube, le bouclier peut se désolidariser au moins partiellement du bord d'attaque de l'aube en composite et engendrer une altération des performances aérodynamiques liée à la dégradation de l'aérodynamisme de l'aube accompagnées d'un balourd dans le cas d'une perte partielle du bouclier. En outre, si une portion du bouclier est arrachée, le bord d'attaque de l'aube n'est plus protégé sur toute sa hauteur, le composite au bord d'attaque de l'aube mis à nu est soumis aux agressions de l'environnement extérieur. Le profil qui en résulte est généralement irrégulier ce qui entraîne également une perte d'aérodynamisme. Il faut alors réparer l'aube et/ou la remplacer.

### Objet et résumé de l'invention

La présente invention vise à remédier au moins en partie à ces inconvénients.

A cet effet, selon la revendication 1, l'invention a pour objet une aube comprenant un corps d'aube en matériau composite à matrice organique renforcée par des fibres et un bouclier de bord d'attaque en un matériau ayant une meilleure résistance aux impacts ponctuels que le matériau composite du corps d'aube, le bouclier de bord d'attaque étant assemblé sur le corps d'aube, l'aube comportant un renfort de solidarisation collé sur le bouclier de bord d'attaque et sur le corps d'aube.

Lors de chocs sur le bouclier de bord d'attaque, la présence du renfort de solidarisation permet de réduire les risques de décollement du bouclier, en particulier près des bords libres du bouclier de bord d'attaque. En effet, le renfort de solidarisation étant collé à la fois sur le bouclier de bord d'attaque et sur le corps d'aube, au moins une partie du bord libre du bouclier de bord d'attaque est couverte par le renfort de solidarisation si bien que l'effort requis pour décoller le bouclier de bord d'attaque du corps d'aube est plus important. Aussi, les risques d'endommagement de l'aube sont réduits. Ainsi, par exemple, le bouclier de bord d'attaque résiste très bien lors de l'ingestion dans le moteur de gros oiseaux, en pouvant éventuellement se décoller localement du corps d'aube, et reste intact, sans se décoller, même localement, en particulier du fait du renfort de solidarisation lors de l'ingestion de petits oiseaux. En cas de besoin, le renfort de solidarisation peut être remplacé en réparation de manière plus aisée que le remplacement total du bouclier.

Par ailleurs, lors d'un choc, si le renfort de solidarisation est endommagé, il peut être remplacé sans avoir à remplacer le bouclier de bord d'attaque et/ou l'aube.

Le corps d'aube en matériau composite à matrice organique renforcée par des fibres peut être un tissé 3D.

On comprend que dans ce mode de réalisation, le corps d'aube comprend des fibres tissées dans les trois dimensions de l'espace. Ainsi, le corps d'aube n'est pas réalisé par un empilement d'une pluralité de couches en deux dimensions (2D) en matériau composte à matrice renforcée par des fibres. Un corps d'aube en tissé 3D est moins sujet à l'effilochage qu'un corps d'aube en tissé 2D. Aussi, lorsqu'il se produit un impact ponctuel sur un tel corps d'aube 3D, le risque de décollement du bouclier de bord d'attaque du corps d'aube est augmenté. La présence du renfort de solidarisation collé sur le bouclier de bord d'attaque et sur le corps d'aube est très avantageuse.

L'aube comporte un bord d'attaque et un bord de fuite et le bouclier de bord d'attaque comporte un bord libre, le renfort de solidarisation comporte une zone de recouvrement du bouclier de bord d'attaque et une zone de recouvrement du corps d'aube, la zone de recouvrement du bouclier de bord d'attaque pouvant avoir une largeur, mesurée perpendiculairement au bord libre, comprise entre 0.5 cm et 1.5 cm, de préférence comprise entre 0.8 cm et 1.2 cm, encore plus de préférence égale à environ 1 cm.

L'aube comporte une tête d'aube et un pied d'aube et une hauteur totale, le renfort de solidarisation peut être collé à proximité de la tête d'aube, entre 0.6 de la hauteur totale de l'aube, de préférence 0.7 de la hauteur totale de l'aube, mesurée en partant du pied d'aube, et la hauteur totale de l'aube, de préférence 0.95 de la hauteur totale de l'aube, encore plus de préférence 0.9 de la hauteur totale de l'aube.

Le bouclier de bord d'attaque peut être en alliage à base de titane.

Ce matériau présente une très bonne résistance aux impacts ponctuels.

On entend par alliage à base de titane, des alliages dont la teneur massique en titane est majoritaire. On comprend que le titane est donc l'élément dont la teneur massique dans l'alliage est la plus élevée. L'alliage à base de titane a par exemple une teneur massique d'au moins 50% de titane, de préférence d'au moins 70% de titane, encore plus préférentiellement d'au moins 80% de titane.

Le bouclier de bord d'attaque peut également être en acier ou en alliage métallique communément désigné par la marque déposée Inconel™. On parle par la suite d'Inconel pour désigner un alliage à base de fer alliés avec du nickel et du chrome.

Selon la revendication 1, le renfort de solidarisation comprend des fibres orientées préférentiellement perpendiculairement à un bord libre du bouclier de bord d'attaque.

L'orientation des fibres est parallèle aux efforts principaux auxquels sont soumis les bords libres des boucliers de bord d'attaque lors de leur décollement, si bien que l'on maximise l'effet de renforcement du renfort de solidarisation. Un renfort de solidarisation de ce type est de coût peu élevé et est aisément disponible. Il peut également être facilement positionné et collé sur l'aube.

Le renfort de solidarisation peut comporter des fibres unidirectionnelles, des fibres tissées et/ou des fibres non tissées réparties uniformément. Ces fibres sont par exemple des fibres de verre ou des fibres de carbone.

Le renfort de solidarisation peut comporter un empilement de couches de fibres, chaque couche pouvant comprendre des fibres d'une composition différente des autres couches et chaque couche pouvant avoir une orientation des fibres différentes des autres couches.

La composition du renfort de solidarisation peut ne pas être uniforme sur toute sa surface.

On comprend donc que bien que des fibres puissent avoir des orientations différentes, l'orientation des fibres est majoritairement perpendiculaire à un bord libre du bouclier de bord d'attaque.

L'aube comporte une tête d'aube et un pied d'aube et le bouclier de bord d'attaque peut comporter une partie en saillie et une partie en creux, la partie en creux étant disposée entre la tête d'aube et la partie en saillie et le renfort de solidarisation peut être collé sur la partie en creux.

La partie en creux de l'aube est disposée plus vers tête d'aube que la partie en saillie. On a constaté que les décollements du bouclier de bord d'attaque ont généralement lieu dans la partie en creux du bouclier de bord d'attaque, en tête d'aube.

L'aube peut comporter un extrados, un intrados et au moins deux renforts de solidarisation, un premier renfort de solidarisation étant collé sur l'intrados et un deuxième renfort de solidarisation étant collé sur l'extrados.

On renforce ainsi le bord libre du côté intrados et extrados de l'aube.

Par ailleurs, notamment lorsque l'aube comprend plusieurs renforts de solidarisation, chaque renfort de solidarisation peut avoir une forme différente des autres renforts de solidarisation et/ou comprendre des fibres d'une composition et d'une orientation différentes des autres renforts de solidarisation et/ou être formé par une ou plusieurs couches de fibres empilées, ces couches pouvant comprendre des fibres d'une composition différente des autres couches et chaque couche pouvant avoir une orientation des fibres différentes des autres couches.

L'aube peut comporter un extrados et un intrados et dans laquelle le renfort de solidarisation comporte une première partie collée sur l'intrados et une deuxième partie collée sur l'extrados, la première partie et la deuxième partie sont reliées entre elles par une partie intermédiaire.

On colle un seul renfort de solidarisation sur l'aube qui couvre à la fois les bords libres du bouclier de bord d'attaque du côté intrados et du côté extrados.

La partie intermédiaire peut être collée sur le bouclier de bord d'attaque.

La partie intermédiaire peut être collée sur un bord de fuite de l'aube.

La partie intermédiaire peut être collée sur une tête d'aube.

L'invention concerne également un turboréacteur comprenant une soufflante comportant une pluralité d'aubes telles que définies précédemment ainsi qu'un procédé de fabrication d'une aube telle que définie précédemment.

### Brève description des dessins

D'autres caractéristiques et avantages de l'invention ressortiront de la description suivante de modes de réalisation de l'invention, donnés à titre d'exemples non limitatifs, en référence aux figures annexées, sur lesquelles :
- la figure 1 est une vue schématique en perspective d'un turboréacteur à double flux ;
- la figure 2 est une vue schématique en perspective du côté intrados d'une aube tournante de la soufflante du turboréacteur de la figure 1 selon un premier mode de réalisation de l'aube ;
- la figure 3 est une vue schématique en perspective du côté extrados de l'aube de la figure 3 ;
- les figures 4, 5A, 5B et 5C sont des vues schématiques en perspective de renfort de solidarisation ;
- les figures 6 et 7 sont des vues schématiques en perspective respectivement du côté intrados et du côté extrados d'une aube selon un deuxième mode de réalisation de l'aube ;
- les figures 8, 9 et 10 sont des vues schématiques en perspective d'une aube respectivement selon un troisième, quatrième et cinquième mode de réalisation de l'aube.

### Description détaillée de l'invention

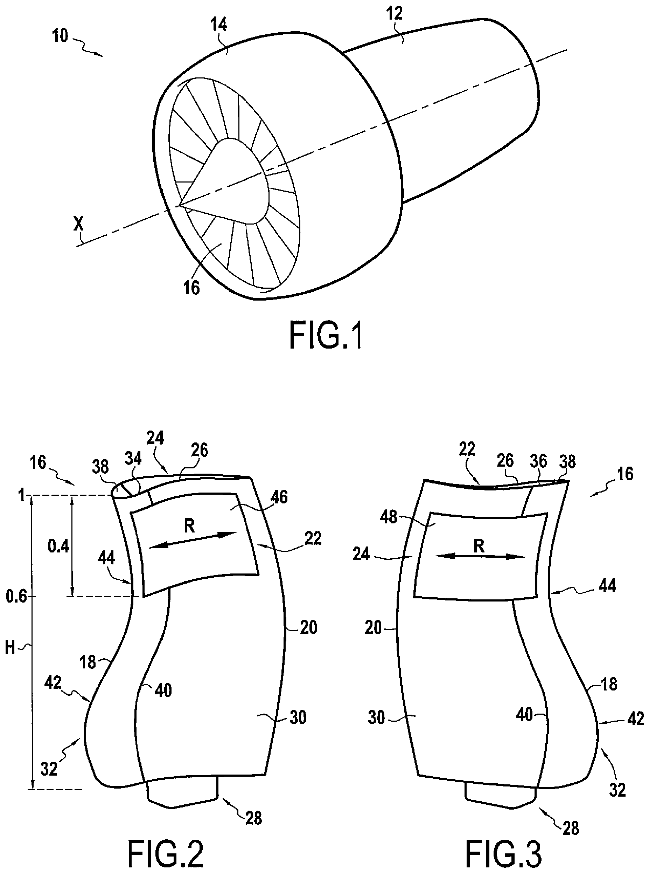

La figure 1 illustre un turboréacteur à double flux 10 comprenant un groupe générateur de gaz 12 et une soufflante 14. Cette soufflante 14 comprend une pluralité d'aubes tournantes 16, arrangées radialement autour d'un axe central X, et profilées aérodynamiquement de manière à impulser l'air par leur rotation. Ainsi, comme illustré sur les figures 2 et 3, chaque aube 16 présente un bord d'attaque 18, un bord de fuite 20, un intrados 22, un extrados 24, une tête d'aube 26 et un pied d'aube 28.

En fonctionnement normal, le vent relatif est sensiblement orienté vers le bord d'attaque 18 de chaque aube 16. Ainsi, ce bord d'attaque 18 est particulièrement exposé aux impacts. En particulier quand l'aube 16 comprend un corps d'aube 30 en matériau composite, notamment à matrice polymère renforcée par des fibres, il convient donc de protéger le bord d'attaque 18 avec un bouclier de bord d'attaque 32 intégré à chaque aube. En d'autres termes, le bouclier de bord d'attaque 32 est assemblé sur le corps d'aube 30.

Le bouclier de bord d'attaque 32 est fabriqué en un matériau ayant une meilleure résistante aux impacts ponctuels que le matériau composite du corps d'aube 30. Le bouclier de bord d'attaque 32 est principalement métallique, et plus spécifiquement en alliage à base de titane, comme par exemple le TA6V (Ti-6Al-4V). Le bouclier de bord d'attaque 32 pourrait également être en acier ou en alliage métallique communément désigné par la marque déposée Inconel™. On parle par la suite d'Inconel pour désigner un alliage à base de fer alliés avec du nickel et du chrome.

Le bouclier de bord d'attaque 32 comporte une ailette intrados 34, une ailette extrados 36 et une section centrale 38 plus épaisse, destinée à chevaucher un bord du corps d'aube 30 et reliant l'ailette intrados 34 et l'ailette extrados 36. Les ailettes intrados et extrados 34, 36 assurent le positionnement du bouclier 32 sur le corps d'aube 30. Les ailettes intrados et extrados 34, 36 présentent chacune un bord libre 40 et peuvent avoir des longueurs identiques ou une des ailettes 34, 36 peut être plus longue que l'autre.

Par ailleurs, le bouclier 32 comporte une partie en saillie 42 et une partie en creux 44. La partie en saillie 44 est disposée entre la tête d'aube 26 et la partie en saillie 42. On comprend donc que la partie en saillie 42 du bouclier 32 est disposée entre la partie en creux 44 et le pied d'aube 28. Ainsi, en partant du pied d'aube vers la tête d'aube, on a successivement le pied d'aube 28, la partie en saillie 42, la partie en creux 44 et la tête d'aube 26.

Dans le mode de réalisation des figures 2 et 3, l'aube 16 comporte un premier renfort de solidarisation 46 collé sur l'intrados 22 et un deuxième renfort de solidarisation 48 collé sur l'extrados 24. Chaque renfort de solidarisation 46, 48 est collé à la fois sur le corps d'aube 30 et sur le bouclier de bord d'attaque 32. Chaque renfort de solidarisation 46, 48 couvrent ainsi une partie de chaque bord libre 40 du bouclier de bord d'attaque 32 respectivement sur l'intrados 22 et l'extrados 24.

Le renfort de solidarisation 46 est collé sur la partie en creux 44 et couvre donc la partie du bord libre 40 du bouclier de bord d'attaque 32 se situant au droit de cette partie en creux 44. Sur la figure 2, le renfort de solidarisation 46 est collé à proximité de la tête d'aube 26. Il est collé entre 0.6 de la hauteur totale H de l'aube 16, mesurée en partant du pied d'aube 28, et 0.95 de la hauteur totale H de l'aube 16.

Cette étendue dépend notamment du déport du bord d'attaque 18 en flèche avant ou en flèche arrière, c'est-à-dire de la projection axiale de la plus grande avancée côté amont au regard du flux d'air du bord d'attaque 18 qui est bombé et/ou du plus grand retrait côté aval au regard du flux d'air. Le renfort de solidarisation 46 est disposé en regard de ce déport du bord d'attaque 18.

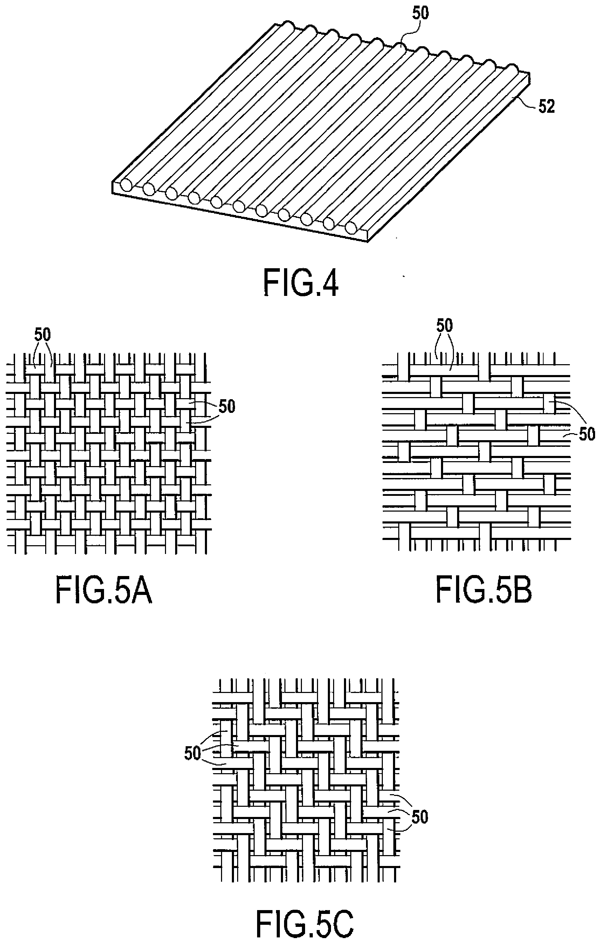

Les renforts de solidarisation 46, 48 peuvent comprendre des fibres. Par exemple, comme représenté sur la figure 4, les fibres 50 peuvent toutes être orientées dans la même direction, on parle alors de fibres unies directionnelles. Les fibres 50 sont ici représentées partiellement immergées dans une matrice 52 afin de montrer leur orientation. On comprend que dans le renfort de solidarisation, les fibres 50 sont complètement immergées dans la matrice 52, on parle alors de plis imprégnés. Généralement, la matrice 52 comprend des composés permettant de coller les fibres sur un support, dans le cas d'espèce sur l'aube 16.

Sur la figure 4, les fibres 50 sont représentées en torons de section transversale circulaire.

Avantageusement, les fibres 50 ont une section transversale rectangulaire. Ainsi, le renfort de solidarisation 46 peut être limité en épaisseur, ce qui permet de ne pas nuire aux caractéristiques aérodynamiques de l'aube 16. Par exemple, la section transversale rectangulaire des torons peut présenter une épaisseur de 0.1 mm et une largeur comprise entre 2 mm et 3 mm. Le renfort de solidarisation est tel qu'il ne crée pas de bossage sur l'aube, en minimisant la nécessité les apports couches de finition aérodynamique.

Une telle épaisseur de fibres, en particulier lorsque le corps d'aube 30 est en tissé 3D, permet d'obtenir un état de surface amélioré du corps d'aube 30. Le renfort de solidarisation 46 permet d'atténuer les ondulations de surface du corps d'aube 30 en matériau composite à matrice polymère renforcée par des fibres. Ainsi, un tel renfort de solidarisation 46 permet d'améliorer les caractéristiques aérodynamiques de l'aube 16.

Les fibres 50 sont préférentiellement orientées perpendiculairement au bord libre 40 du bouclier de bord d'attaque 32. En effet, cette direction, représentée par la double flèche R, et la direction dans laquelle les efforts d'arrachement du bouclier de bord d'attaque sont maximaux.

Le renfort de solidarisation peut également comporter des fibres tissées. Les figures 5A, 5B et 5C présentent différents exemple de fibres tissées. Les fibres 50 peuvent être immergées dans une matrice ou être fournies sous forme de feuilles ou de rouleaux non imprégnés.

Le renfort de solidarisation on peut également comporter des fibres non-tissées, par exemple des fibres 50 distribuées de façon uniforme au sein d'une matrice 52.

Ainsi, le procédé de fabrication de l'aube 16 comprend une étape d'assemblage du bouclier de bord d'attaque 32 sur le corps d'aube 30, par exemple par collage. Cette étape est suivie par une étape de collage du ou des renforts de solidarisation 46, 48 sur l'aube 16. Chaque renfort de solidarisation 46, 48 étant collés à la fois sur le corps d'aube 30 et sur le bouclier de bord d'attaque 32.

Typiquement, lorsque la matrice 52 comprend une colle thermodurcissable, l'aube sur laquelle est positionné le renfort de solidarisation est disposée dans un autoclave afin d'assurer le collage du renfort de solidarisation sur l'aube.

Lorsque les fibres sont sous leur forme non-imprégnée, elles sont coupées aux dimensions désirées, disposée sur l'aube 16 et imprégnées de colle. L'aube 16 subit ensuite un traitement, par exemple une étape de chauffage dans un autoclave, afin d'assurer le collage du renfort de solidarisation sur l'aube.

L'étape de collage peut être précédée par une étape de préparation des surfaces accolées, c'est-à-dire des surfaces du corps d'aube 30 et/ou du bouclier de bord d'attaque 32.

Dans ce qui suit, les éléments communs aux différents modes de réalisation sont identifiés par les mêmes références numériques.

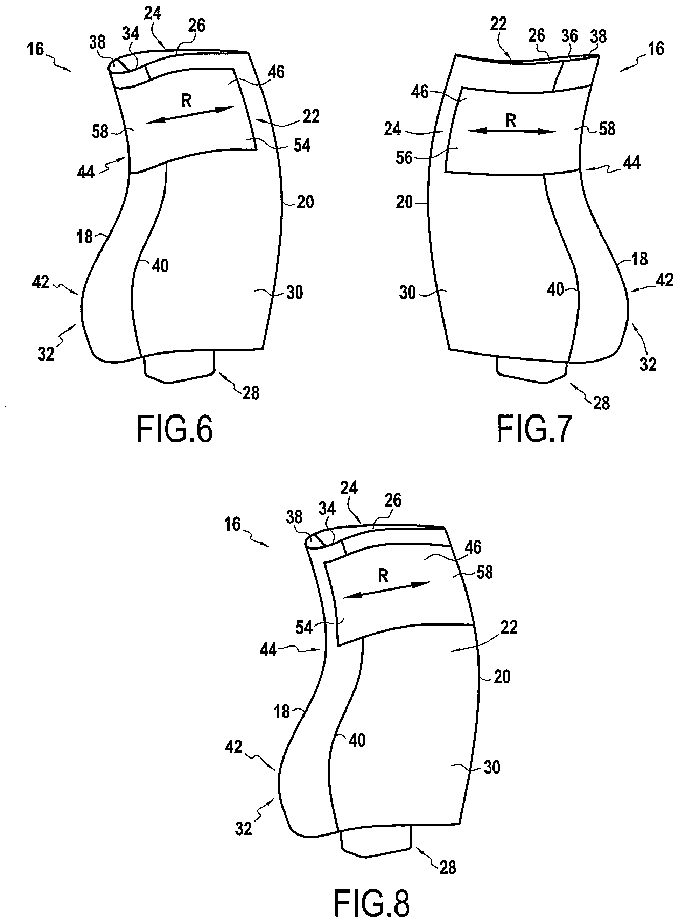

Les figures 6 et 7 représentent un deuxième mode de réalisation de l'aube 16 dans lequel le renfort de solidarisation 46 comporte une première partie 54 collée sur l'intrados 22 et une deuxième partie 56 collée sur l'extrados 24. La première partie 54 et la deuxième partie 56 sont reliées entre elles par une partie intermédiaire 58. Sur les figures 6 et 7, la partie intermédiaire 58 est collée sur le bouclier de bord d'attaque 32. Le renfort de solidarisation 46 couvre le bouclier de bord d'attaque 32 sur toute la hauteur du renfort de solidarisation 46.

La figure 8 représente un troisième mode de réalisation de l'aube 16 dans lequel la partie intermédiaire 58 du renfort de solidarisation 46 est collé sur le bord de fuite 20 de l'aube 16.

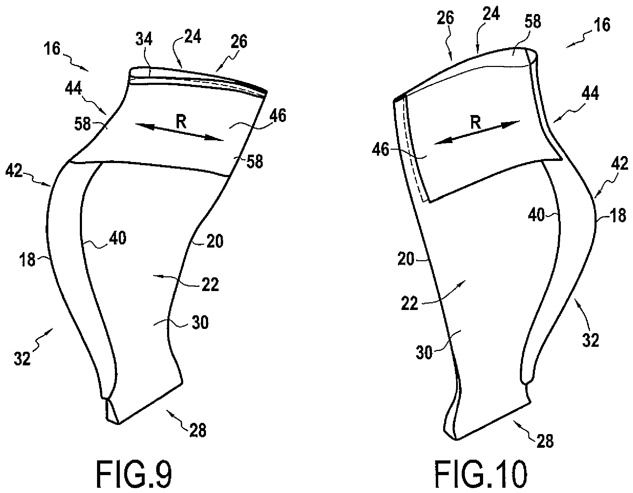

La figure 9 représente un quatrième mode de réalisation de l'aube 16 dans lequel le renfort de solidarisation 46 comprend deux parties intermédiaires 58 l'une collée sur le bouclier de bord d'attaque 32 et l'autre collé sur le bord de fuite 20 de l'aube 16. Le renfort de solidarisation 46 couvre ainsi toute la surface de l'aube 46 sur la hauteur du renfort de solidarisation 46.

On notera que l'aube 16 de la figure 9 présente une forme différente des aubes des figures précédentes. Cependant, l'aube 16 de la figure 9 comprend également une partie en saillie 42 et une partie en creux 44. La partie en saillie 44 est disposée entre la tête d'aube 26 et la partie en saillie 42. On comprend donc que la partie en saillie 42 du bouclier 32 est disposée entre la partie en creux 44 et le pied d'aube 28. Ainsi, en partant du pied d'aube vers la tête d'aube, on a successivement le pied d'aube 28, la partie en saillie 42, la partie en creux 44 et la tête d'aube 26.

La figure 10 représente un cinquième mode de réalisation de l'aube 16 dans lequel la partie intermédiaire 58 est collée sur la tête d'aube 26. Sur la figure 10, les fibres sont orientées préférentiellement perpendiculairement au bord libre 40 du bouclier de bord d'attaque 32. Alternativement, les fibres pourraient être orientées préférentiellement perpendiculairement au bord libre du bouclier de bord d'attaque en tête d'aube, c'est-à-dire que l'orientation des fibres du renfort de solidarisation serait parallèle au bord libre 40 du bouclier de bord d'attaque 32.

Le corps d'aube 30 peut être obtenu par injection RTM d'une préforme tissée 3D.

Lorsque le bouclier de bord d'attaque 32 est co-moulé sur la préforme tissée 3D dans le moule d'injection RTM, les fibres 50 des renforts de solidarisation 46, 48 peuvent être assemblés au reste de l'aube lors de l'injection RTM d'imprégnation de la préforme tissée 3D.

Lorsque le bouclier de bord d'attaque 32 est collé sur le corps d'aube 30, les fibres 50 des renforts de solidarisation 46, 48 peuvent être assemblés sur l'aube 16 par imprégnation de polyuréthane des fibres 50.

On notera qu'une couche de polyuréthane de finition est généralement appliquée sur l'intrados du corps d'aube 30 afin d'éviter l'abrasion et l'usure de l'intrados. Aussi, l'étape d'application de polyuréthane, notamment sur l'intrados du corps d'aube 30 est une étape qui fait déjà partie du procédé de fabrication d'une aube 30 en matériau composite à matrice organique renforcée par des fibres. Par ailleurs, en cas d'application de couche de peinture de finition sur le corps de l'aube, le renfort de solidarisation ne complexifie pas le procédé de fabrication de l'aube en étant recouvert si besoin par cette peinture.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

Notamment, le renfort de solidarisation peut comprendre plusieurs couches de fibres empilées les unes sur les autres, chaque couche pouvant comprendre des fibres d'une composition différente des autres couches et chaque couche pouvant avoir une orientation des fibres différentes des autres couches. La composition du renfort de solidarisation peut ne pas être uniforme sur toute sa surface. Par ailleurs, notamment lorsque l'aube comprend plusieurs renforts de solidarisation, chaque renfort de solidarisation peut avoir une forme différente des autres renforts de solidarisation et/ou comprendre des fibres d'une composition et d'une orientation différentes des autres renforts de solidarisation et/ou être formé par une ou plusieurs couches de fibres empilées, ces couches pouvant comprendre des fibres d'une composition différente des autres couches et chaque couche pouvant avoir une orientation des fibres différentes des autres couches.

## Revendications

1. Aube (16) comprenant un corps d'aube (30) en matériau composite à matrice organique renforcée par des fibres et un bouclier de bord d'attaque (32) en un matériau ayant une meilleure résistance aux impacts ponctuels que le matériau composite du corps d'aube, le bouclier de bord d'attaque (32) étant assemblé sur le corps d'aube (30), **caractérisé en ce que** l'aube (16) comporte un renfort de solidarisation (46, 48) collé sur le bouclier de bord d'attaque (32) et sur le corps d'aube (30), le renfort de solidarisation (46, 48) comprenant des fibres orientées préférentiellement perpendiculairement à un bord libre (40) du bouclier de bord d'attaque (32).

2. Aube (16) selon la revendication précédente, dans laquelle l'aube (16) comporte un bord d'attaque (18) et un bord de fuite (20) et le bouclier de bord d'attaque (32) comporte un bord libre (40), le renfort de solidarisation (46, 48) comporte une zone de recouvrement du bouclier de bord d'attaque (32) et une zone de recouvrement du corps d'aube (30), la zone de recouvrement du bouclier de bord d'attaque (32) présentant une largeur, mesurée perpendiculairement au bord libre (40), comprise entre 0.5 cm et 1.5 cm, de préférence comprise entre 0.8 cm et 1.2 cm, encore plus de préférence égale à environ 1 cm.

3. Aube (16) selon l'une quelconque des revendications précédentes, dans laquelle l'aube comporte une tête d'aube (26) et un pied d'aube (28), le bouclier de bord d'attaque (32) comportant une partie en saillie (42) et une partie en creux (44), la partie en creux (44) étant disposée entre la tête d'aube (26) et la partie en saillie (42) et le renfort de solidarisation (46, 48) étant collé sur la partie en creux (44).

4. Aube (16) selon l'une quelconque des revendications 1 à 3, dans laquelle l'aube (16) comporte un extrados (24), un intrados (22) et au moins deux renforts de solidarisation, un premier renfort de solidarisation (46) étant collé sur l'intrados (22) et un deuxième renfort de solidarisation (48) étant collé sur l'extrados (24).

5. Aube (16) selon l'une quelconque des revendications 1 à 3, dans laquelle l'aube (16) comporte un extrados (24) et un intrados (22) et dans laquelle le renfort de solidarisation (46) comporte une première partie (54) collée sur l'intrados (22) et une deuxième partie (56) collée sur l'extrados (24), la première partie (54) et la deuxième partie (56) sont reliées entre elles par une partie intermédiaire (58).

6. Aube (16) selon la revendication 5, dans laquelle la partie intermédiaire (58) est collée sur le bouclier de bord d'attaque (32).

7. Aube (16) selon la revendication 5 ou 6, dans laquelle la partie intermédiaire (58) est collée sur un bord de fuite (20) de l'aube (16).

8. Aube (16) selon l'une quelconque des revendications 5 à 7, dans laquelle la partie intermédiaire (58) est collée sur une tête d'aube (26).

9. Turboréacteur (10) comprenant une soufflante (14) comportant une pluralité d'aubes (16) selon l'une quelconque des revendications précédentes.

10. Procédé de fabrication d'une aube (16) selon l'une quelconque des revendications 1 à 8, comprenant les étapes suivantes :
- assemblage du corps d'aube (30) et du bouclier de bord d'attaque (32) ; et
- collage du renfort de solidarisation (46, 48) sur l'aube (16).

## Patentansprüche

1. Schaufel (16), umfassend einen Schaufelkörper (30) aus Verbundwerkstoff mit einer faserverstärkten organischen Matrix und einen Vorderkantenschutzschild (32) aus einem Material, das eine bessere Widerstandsfähigkeit gegenüber punktuellen Aufschlägen als der Verbundwerkstoff des Schaufelkörpers aufweist, wobei der Vorderkantenschutzschild (32) an dem Schaufelkörper (30) angebracht ist, **dadurch gekennzeichnet, dass** die Schaufel (16) eine Verstärkung zum festen Verbinden (46, 48) umfasst, die an den Vorderkantenschutzschild (32) und an den Schaufelkörper (30) geklebt ist, wobei die Verstärkung zum festen Verbinden (46, 48) Fasern umfasst, die vorzugsweise senkrecht zu einem freien Rand (40) des Vorderkantenschutzschilds (32) ausgerichtet sind.

2. Schaufel (16) nach dem vorhergehenden Anspruch, wobei die Schaufel (16) eine Vorderkante (18) und eine Hinterkante (20) umfasst und der Vorderkantenschutzschild (32) einen freien Rand (40) aufweist, wobei die Verstärkung zum festen Verbinden (46, 48) einen Bereich zum Überlappen des Vorderkantenschutzschildes (32) und einen Bereich zum Überlappen des Schaufelkörpers (30) umfasst, wobei der Bereich zum Überlappen des Vorderkantenschutzschildes (32) eine senkrecht zum freien Rand (40) gemessene Breite aufweist, die zwischen 0,5 cm und 1,5 cm, vorzugsweise zwischen 0,8 cm und 1,2 cm liegt, noch bevorzugter gleich etwa 1 cm beträgt.

3. Schaufel (16) nach einem der vorhergehenden Ansprüche, wobei die Schaufel einen Schaufelkopf (26) und einen Schaufelfuß (28) umfasst, wobei der Vorderkantenschutzschild (32) einen vorstehenden Teil (42) und einen vertieften Teil (44) umfasst, wobei der vertiefte Teil (44) zwischen dem Schaufelkopf (26) und dem vorstehenden Teil (42) angeordnet ist und die Verstärkung zum festen Verbinden (46, 48) an den vertieften Teil (44) geklebt ist.

4. Schaufel (16) nach einem der Ansprüche 1 bis 3, wobei die Schaufel (16) eine Rückseite (24), eine Vorderseite (22) und wenigstens zwei Verstärkungen zum festen Verbinden umfasst, wobei eine erste Verstärkung zum festen Verbinden (46) auf die Vorderseite (22) geklebt ist und eine zweite Verstärkung zum festen Verbinden (48) auf die Rückseite (24) geklebt ist.

5. Schaufel (16) nach einem der Ansprüche 1 bis 3, wobei die Schaufel (16) eine Rückseite (24) und eine Vorderseite (22) umfasst und wobei die Verstärkung zum festen Verbinden (46) einen ersten Teil (54), welcher auf die Vorderseite (22) geklebt ist, sowie einen zweiten Teil (56), welcher auf die Rückseite (24) geklebt ist, umfasst, wobei der erste Teil (54) und der zweite Teil (56) durch einen Zwischenteil (58) untereinander verbunden sind.

6. Schaufel (16) nach Anspruch 5, bei welcher der Zwischenteil (58) an den Vorderkantenschutzschild (32) geklebt ist.

7. Schaufel (16) nach Anspruch 5 oder 6, bei welcher der Zwischenteil (58) an eine Hinterkante (20) der Schaufel (16) geklebt ist.

8. Schaufel (16) nach einem der Ansprüche 5 bis 7, bei welcher der Zwischenteil (58) an einen Schaufelkopf (26) geklebt ist.

9. Turbostrahltriebwerk (10), umfassend ein Gebläse (14), das eine Vielzahl von Schaufeln (16) nach einem der vorhergehenden Ansprüche umfasst.

10. Verfahren zur Herstellung einer Schaufel (16) nach einem der Ansprüche 1 bis 8, umfassend die folgenden Schritte:
Zusammenfügen des Schaufelkörpers (30) und des Vorderkantenschutzschildes (32), und
Festkleben der Verstärkung zum festen Verbinden (46, 48) an der Schaufel (16).

## Claims

1. A blade (16) comprising a blade body (30) made of organic matrix composite material reinforced by fibers and a leading edge shield (32) made of a material that withstands point impacts better than the composite material of the blade body, the leading edge shield (32) being assembled on the blade body (30), the blade being **characterized in that** the blade (16) includes bonding reinforcement (46, 48) adhesively bonded on the leading edge shield (32) and on the blade body (30), wherein the bonding reinforcement (46, 48) has fibers that are preferably oriented perpendicularly to the free edge (40) of the leading edge shield (32).

2. A blade (16) according to the preceding claim, wherein the blade (16) has a leading edge (18) and a trailing edge (20), and the leading edge shield (32) has a free edge (40), the bonding reinforcement (46, 48) including a zone covering the leading edge shield (32) and a zone covering the blade body (30), the zone covering the leading edge shield (32) presenting a width, as measured perpendicularly to the free edge (40), that lies in the range 0.5 cm to 1.5 cm, and preferably in the range 0.8 cm to 1.2 cm, more preferably equal to about 1 cm.

3. A blade (16) according to any preceding claim, wherein the blade includes a blade tip (26) and a blade root (28), the leading edge shield (32) including a projecting portion (42) and a recessed portion (44), the recessed portion (44) being arranged between the blade tip (26) and the projecting portion (42) and the bonding reinforcement (46, 48) being adhesively bonded on the recessed portion (44).

4. A blade (16) according to any one of claims 1 to 3, wherein the blade (16) has a suction side (24), a pressure side (22), and at least two bonding reinforcements, a first bonding reinforcement (46) being adhesively bonded on the pressure side (22), and a second bonding reinforcement (48) being adhesively bonded on the suction side (24).

5. A blade (16) according to any one of claims 1 to 3, wherein the blade (16) has a suction side (24) and a pressure side (22), and wherein the bonding reinforcement (46) comprises a first portion (54) adhesively bonded on the pressure side (22) and a second portion (56) adhesively bonded on the suction side (24), the first portion (54) and the second portion (56) being connected together by an intermediate portion (58).

6. A blade (16) according to claim 5, wherein the intermediate portion (58) is adhesively bonded on the leading edge shield (32).

7. A blade (16) according to claim 5 or 6, wherein the intermediate portion (58) is adhesively bonded on a trailing edge (20) of the blade (16).

8. A blade (16) according to any one of claims 5 to 7, wherein the intermediate portion (58) is adhesively bonded on the blade tip (26).

9. A turbojet (10) including a fan (14) having a plurality of blades (16) according to any preceding claim.

10. A method of fabricating a blade (16) according to any one of claims 1 to 8, the method comprising the following steps:
• assembling together the blade body (30) and the leading edge shield (32); and
• adhesively bonding the bonding reinforcement (46, 48) on the blade (16).
